# FASCICULE DE BREVET EUROPEEN

(11) **EP 1 377 481 B1**
(45) Date de publication et mention de la délivrance du brevet: **17.05.2006**
(21) Numéro de dépôt: 02761920.4
(22) Date de dépôt: 08.04.2002
(51) Int. Cl.: B60N 2/24, B60N 2/44, B60R 21/12

(54) **DISPOSITIF ANTI-ATTENTATS, EN PARTICULIER POUR SIEGES DE LIEUX PUBLICS OU DE VEHICULES DE TRANSPORTS EN COMMUN**
VORRICHTUNG GEGEN ANGRIFFE INSBESONDERE FÜR ÖFFENTLICHE STÜHLE ODER ÖFFENTLICHE VERKEHRMITTEL
DEVICE FOR PREVENTING ATTACKS, IN PARTICULAR FOR PUBLIC SITE OR PUBLIC TRANSPORT VEHICLE SEATS

(30) Priorité: 12.04.2001 FR 0105075
(43) Date de publication de la demande: 07.01.2004
(73) Titulaire: Compin, 27000 Evreux (FR)
(72) Inventeur: BERNARD, Didier, F-27930 Gravigny (FR); GRARD, Bernard, (FR); STACKLER, Christian, F-27240 Avrilly (FR)
(74) Mandataire: Ramey, Daniel
(86) Numéro de dépôt international: PCT/FR2002/001217
(87) Numéro de publication internationale: WO 2002/083452

(56) Documents cités:
- EP-A- 0 958 975
- DE-A- 2 646 203
- DE-A- 4 403 460

## Description

La présente invention concerne un dispositif anti-attentats, du type destiné à être fixé sous un siège ou un ensemble de sièges dans un lieu public ou dans un véhicule de transports en commun, pour empêcher qu'un engin explosif ou analogue puisse être placé et dissimulé sous le siège ou l'ensemble de sièges.

Ces dispositifs sont en général fixés sous le ou les sièges par des moyens sécurisés, de façon à être indémontables par une personne ne disposant pas d'une clé ou d'un outil approprié. Ces dispositifs fixés à demeure ont pour inconvénient de devoir être démontés puis remontés, ce qui est long et coûteux, quand il faut avoir accès à l'espace situé sous le siège ou l'ensemble de sièges par exemple pour des opérations de nettoyage ou de maintenance.

On connaît par le document US-A-5,957,521 un dispositif de fermeture de l'accès à un espace situé sous le siège arrière relevable d'un véhicule automobile, ce dispositif comprenant un panneau unique muni d'un système de verrouillage et qui est monté pivotant sur le plancher du véhicule ou sur le siège pour autoriser ou fermer l'accès à l'espace situé sous le siège.

L'invention a notamment pour but d'éviter les inconvénients des dispositifs anti-attentats connus.

Elle a pour objet un dispositif du type précité, qui permette d'avoir accès à l'espace situé sous un siège ou un ensemble de sièges sans démontage préalable du dispositif, tout en empêchant efficacement de déposer et de dissimuler un engin explosif ou analogue sous le siège ou l'ensemble de sièges.

Elle propose à cet effet un dispositif anti-attentats, destiné à interdire l'accès sous un siège ou un ensemble de sièges, en particulier dans un lieu public ou dans un véhicule de transports en commun, comprenant des moyens de fixation au siège ou à l'ensemble de sièges et/ou à une structure fixe, caractérisé en ce qu'il comprend plusieurs panneaux mobiles agencés sur des côtés différents du siège ou de l'ensemble de sièges et reliés à des moyens communs de manoeuvre permettant de les déplacer simultanément entre des premières positions d'interdiction d'accès à un espace libre sous le siège ou l'ensemble de sièges et des secondes positions permettant cet accès, et des moyens de verrouillage desdits panneaux au moins dans leurs premières positions.

Dans le dispositif selon l'invention, lorsque les panneaux mobiles sont dans leurs premières positions, l'accès à l'espace situé sous le siège ou l'ensemble de sièges est interdit et il est donc impossible d'y déposer un engin explosif ou analogue. Lorsqu'il faut avoir accès à cet espace pour des opérations de maintenance ou de nettoyage, on déverrouille les panneaux et on les déplace dans leurs secondes positions. Après avoir effectué les opérations voulues de maintenance ou de nettoyage, on ramène les panneaux dans leurs premières positions et on les verrouille en place.

Les moyens communs de manoeuvre permettent de déplacer simultanément les panneaux mobiles entre leurs premières et leurs secondes positions.

Dans un premier mode de réalisation de l'invention, chaque panneau est monté à rotation autour d'un axe fixe sur un châssis portant les moyens de fixation précités.

Par exemple, l'axe de rotation de chaque panneau est sensiblement horizontal et le panneau est déplaçable entre une position abaissée d'interdiction d'accès sous le siège ou l'ensemble de sièges, dans laquelle il est sensiblement vertical, et une position relevée où il est sensiblement horizontal et replié sous le siège ou l'ensemble de sièges.

Dans une autre forme de réalisation de l'invention, le panneau précité comprend un volet roulant, qui passe ou qui est enroulé sur un arbre tournant.

Lorsque les panneaux sont montés pivotants autour d'axes fixes, ils peuvent être reliés par des biellettes à un organe tournant qui est porté par le châssis et qui est monté à rotation autour d'un axe vertical, sous le siège ou l'ensemble de sièges.

Selon les modes de réalisation, les panneaux précités peuvent être des parois pleines ou ajourées, des plaques perforées, des grilles, etc.

De façon avantageuse, le châssis du dispositif selon l'invention peut être intégré ou associé au châssis du siège ou de l'ensemble de sièges.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :

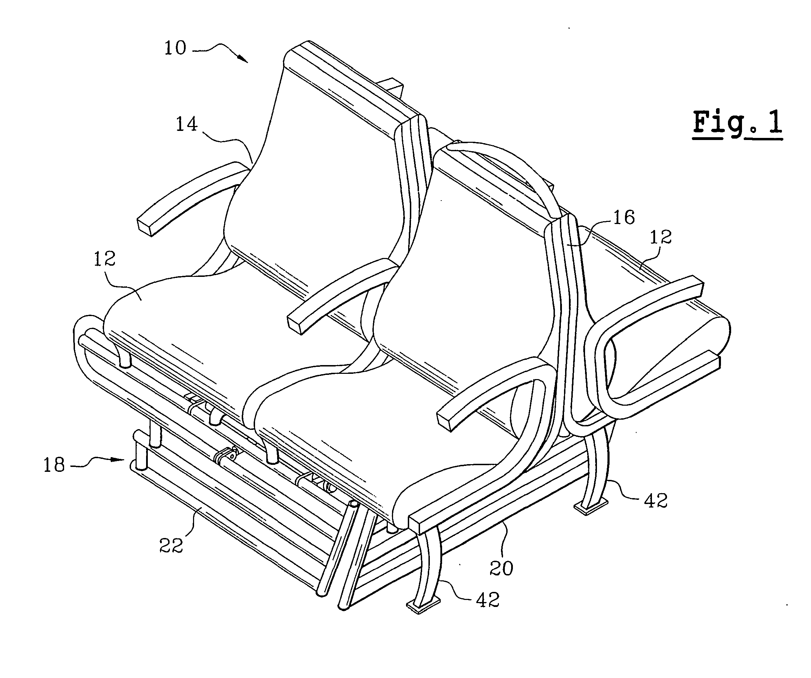

- la figure 1 est une vue schématique en perspective d'un ensemble de sièges équipé d'un dispositif selon l'invention ;
- la figure 2 représente ce dispositif en position d'interdiction d'accès à l'espace situé sous l'ensemble de sièges ;
- la figure 3 représente ce dispositif en position repliée ; et
- la figure 4 est une vue partielle agrandie de ce dispositif, représentant notamment les moyens de manoeuvre et les moyens de verrouillage.

Dans l'exemple de réalisation représenté aux dessins, la référence 10 désigne un ensemble de sièges 12 d'un véhicule de transports en commun, notamment d'un véhicule ferroviaire, cet ensemble 10 comprenant deux sièges 12 disposés côte-à-côte et orientés d'un même côté et deux autres sièges 12 disposés côte-à-côte et dos-à-dos avec les sièges précités.

Cet ensemble de sièges se trouve, sur un côté 14, le long d'une paroi non représentée du véhicule et, de l'autre côté 16, le long d'un couloir ou d'une allée.

Le dispositif selon l'invention, qui est désigné généralement par la référence 18, est disposé fixement sous l'ensemble de sièges 10 pour empêcher de placer et de cacher sous cet ensemble de sièges un engin explosif, incendiaire ou analogue, en interdisant l'accès à l'espace libre situé sous l'ensemble de sièges 10 au moyen de panneaux qui sont au nombre de trois dans l'exemple représenté, comprenant un panneau 20 du côté 16 de l'ensemble de sièges 10, ce panneau 20 s'étendant le long de l'allée ou du couloir, et deux autres panneaux 22 qui sont sensiblement perpendiculaires au panneau 20 et qui s'étendent entre celui-ci et la paroi du véhicule qui se trouve du côté 14 de l'ensemble de sièges 10. Les panneaux 20, 22 qui sont formés de barreaux ou de tubes métalliques dans cet exemple de réalisation, sont montés à rotation autour d'axes horizontaux 24, 26 respectivement sur un châssis rigide 28, formé par exemple de cornières longitudinales et transversales et faisant partie du châssis de l'ensemble de sièges 10 ou étant associé à ce dernier. Le châssis 28 comprend notamment une traverse médiane 30 qui porte un tronçon d'arbre vertical 32 sur lequel est fixé une plaque horizontale 34 qui peut tourner autour de l'axe vertical du tronçon d'arbre 32. Sur cette plaque 34 sont articulées des extrémités de biellettes 36 dont les extrémités opposées sont articulées l'une sur le panneau 20 et les deux autres sur les panneaux 22, de façon excentrée par rapport aux axes de pivotement 24, 26 précités.

De cette façon, le pivotement d'un des panneaux 20, 22 autour de l'axe 24, 26 correspondant se traduit par une rotation de la plaque 34 autour de l'axe du tronçon d'arbre 32 et donc par un pivotement correspondant des autres panneaux 20, 22 autour de leurs axes.

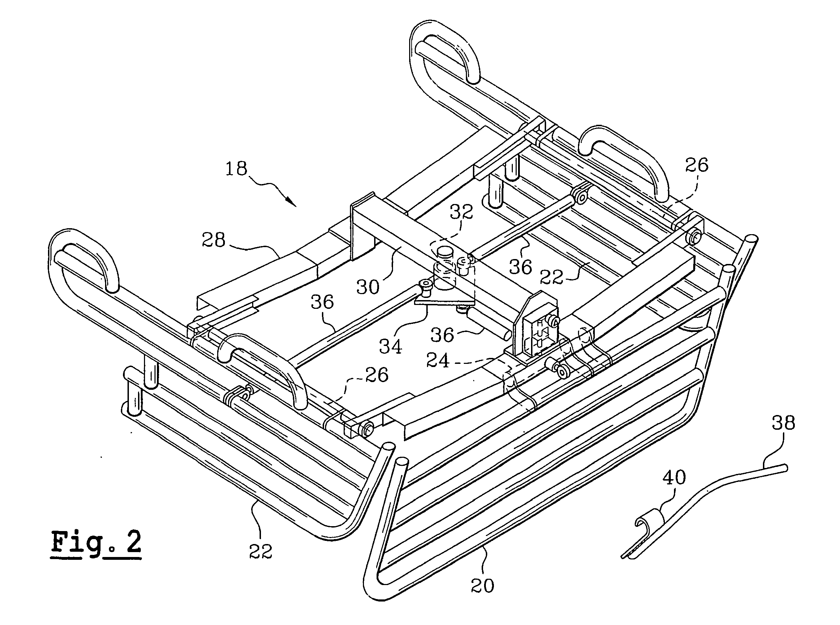

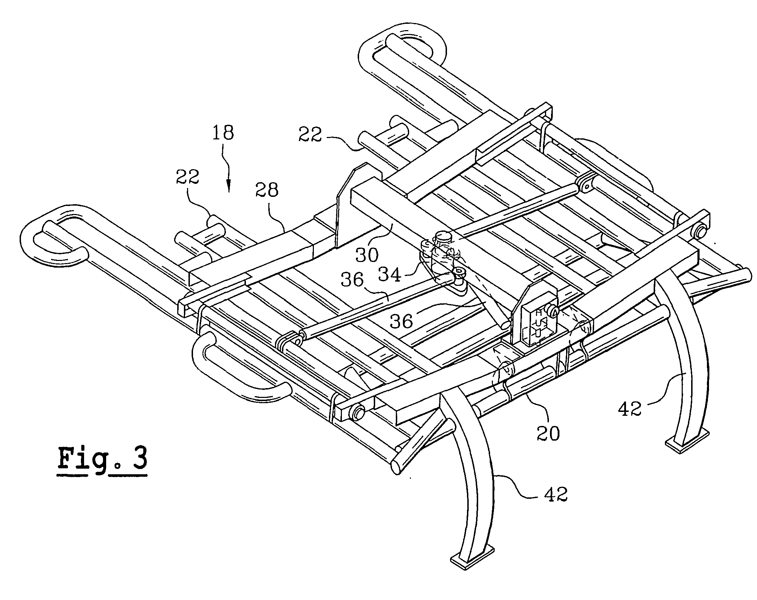

Pour faciliter ce pivotement, on peut utiliser un outil 38 tel que celui représenté en figure 2, qui est un levier dont une extrémité porte une pièce 40 incurvée, sensiblement en forme de C, que l'on peut engager sur l'un des barreaux d'un panneau 20 ou 22 pour le faire pivoter autour de son axe, le levier 38 démultipliant l'effort exercé. C'est en général sur le panneau 20 situé du côté du couloir ou de l'allée centrale que l'on va appliquer cet outil 38, pour manoeuvrer simultanément les panneaux 20 et 22 entre leur position abaissée représentée en figure 2, dans laquelle ils interdisent l'accès à l'espace situé sous l'ensemble de sièges 10, et leur position relevée ou repliée représentée en figure 3, dans laquelle on peut accéder à l'espace situé sous l'ensemble de sièges 10 par exemple pour une maintenance ou un nettoyage.

Comme on l'a représenté plus complètement en figure 3, le châssis 28 du dispositif selon l'invention porte des pieds 42 d'appui et/ou de fixation au sol, qui forment également les pieds de l'ensemble de sièges 10.

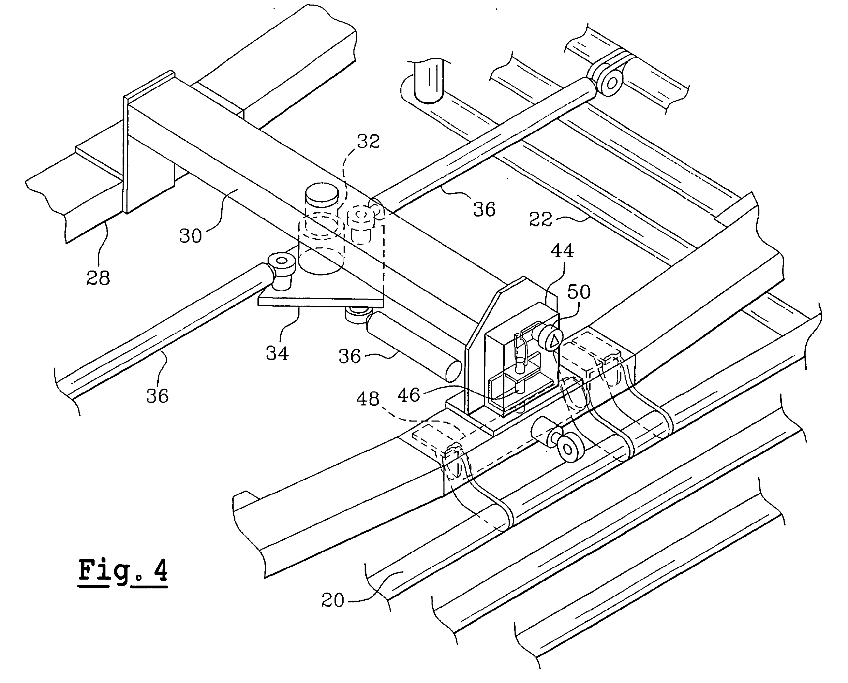

Comme on le voit mieux sur la vue partielle agrandie de la figure 4, le dispositif selon l'invention comprend également des moyens de verrouillage des panneaux 20, 22 dans leur position abaissée et dans leur position relevée. Par exemple, et comme représenté en figure 4, ces moyens de verrouillage comprennent un boîtier 44 qui est monté fixement sur une extrémité de la traverse 30 précitée et qui contient une goupille ou broche verticale 46 dont l'extrémité inférieure peut s'engager dans des orifices d'un tube horizontal 48 solidaire du panneau 20 pour l'immobiliser en rotation autour de son axe de pivotement. Un organe 50 de déverrouillage, qu'un opérateur peut actionner au moyen d'une clé ou d'un outil de forme spéciale, permet de relever la goupille ou broche 46 pour la dégager de son orifice de réception dans le tube 48 et débloquer ainsi le panneau 20. Bien entendu, tout autre mécanisme de verrouillage peut être utilisé à la place des moyens décrits et représentés.

De même, un certain nombre de modifications à la portée de l'homme du métier peuvent être apportées au dispositif qui a été décrit et représenté : par exemple, les panneaux 20, 22 peuvent être des panneaux pleins, des tôles perforées, des grilles d'un type différent de celles représentées, etc.

Il est également possible que les axes de pivotement de ces panneaux soient des axes verticaux ou des axes obliques.

Il est encore possible de remplacer ces panneaux pivotants par des panneaux mobiles du type volet roulant, que l'on peut enrouler autour d'un axe horizontal ou qu'on peut faire passer sur un axe horizontal.

Par ailleurs, les moyens de manoeuvre formés par les biellettes 36 peuvent être remplacés par tout autre moyen équivalent, tel par exemple qu'un mécanisme à chaîne ou à courroie.

Bien évidemment, les formes et dimensions des panneaux mobiles, ainsi que leur nombre, sont adaptés aux formes et dimensions des espaces libres dont il faut empêcher l'accès sous les sièges ou les ensembles de sièges.

## Revendications

1. Dispositif anti-attentats, destiné à interdire l'accès sous un siège ou un ensemble de sièges (10), en particulier dans un lieu public ou dans un véhicule de transports en commun, comprenant des moyens de fixation au siège ou à l'ensemble de sièges et/ou à une structure fixe, **caractérisé en ce qu'**il comprend plusieurs panneaux mobiles (20, 22) agencés sur des côtés différents du siège ou de l'ensemble de sièges et reliés à des moyens communs de manoeuvre (32, 34, 36) permettant de les déplacer simultanément entre des premières positions d'interdiction d'accès à un espace libre sous le siège ou l'ensemble de sièges et des secondes positions permettant cet accès, et des moyens (46, 48, 50) de verrouillage desdits panneaux au moins dans leurs premières positions.

2. Dispositif selon la revendication 1, **caractérisé en ce que** chaque panneau est monté à rotation autour d'un axe fixe (24, 26) sur un châssis (28) portant les moyens de fixation précités.

3. Dispositif selon la revendication 2, **caractérisé en ce que** l'axe de rotation (24, 26) de chaque panneau (20, 22) est sensiblement horizontal et le panneau est mobile entre une position abaissée d'interdiction d'accès où il est sensiblement vertical et une position relevée où il est sensiblement horizontal et replié sous le siège ou l'ensemble de sièges (10).

4. Dispositif selon la revendication 2 ou 3, **caractérisé en ce que** les panneaux (20, 22) sont reliés par des biellettes (36) à un organe tournant (34) porté par le châssis (28) et monté à rotation autour d'un axe vertical.

5. Dispositif selon la revendication 3 ou 4, **caractérisé en ce que**, dans les premières positions, les panneaux (20, 22) sont sensiblement perpendiculaires les uns aux autres.

6. Dispositif selon l'une des revendications précédentes, **caractérisé en ce que** les panneaux (20, 22) sont des plaques pleines ou ajourées, des plaques perforées ou des grilles.

7. Dispositif selon l'une des revendications 1 à 3, **caractérisé en ce que** chaque panneau comprend un volet roulant passant ou enroulé sur un arbre tournant.

8. Dispositif selon l'une des revendications 2 à 7, **caractérisé en ce que** son châssis (28) est intégré ou associé au châssis du siège ou de l'ensemble de sièges (10) sous lequel le dispositif est placé.

## Claims

1. An anti-terrorist device for denying access to under a seat or a set of seats (10), in particular in a public place or in a public transport vehicle, the device comprising fastener means for securing to the seat or to the set of seats and/or to a fixed structure, and being **characterized in that** it comprises a plurality of moving panels (20, 22) arranged on different sides of the seat or the set of seats and connected to a common drive means (32, 34, 36) enabling the panels to be moved simultaneously between first positions denying access to an empty space under the seat or the set of seats, and second positions allowing such access, and locking means (46, 48, 50) for locking said panels at least in their first positions.

2. A device according to claim 1, **characterized in that** each panel is mounted to turn about a stationary pivot axis (24, 26) on a frame (28) carrying the said fastener means.

3. A device according to claim 2, **characterized in that** the pivot axis (24, 26) of each panel (20, 22) is substantially horizontal, and the panel is movable between a lowered position for denying access in which it is substantially vertical, and a raised position in which it is substantially horizontal and folded under the seat or the set of seats (10).

4. A device according to claim 2 or claim 3, **characterized in that** the panels (20, 22) are connected by links (36) to a rotary member (34) carried by the frame (28) and mounted to turn about a vertical axis.

5. A device according to claim 3 or claim 4, **characterized in that** in the first positions, the panels (20, 22) are substantially perpendicular to one another.

6. A device of according to any preceding claim, **characterized in that** the panels (20, 22) are solid or openwork plates, perforated plates, or grids.

7. A device according to any one of claims 1 to 3, **characterized in that** each panel comprises a rolling flap passing over or wound on a rotary shaft.

8. A device according to any one of claims 2 to 7, **characterized in that** its frame (28) is integrated in or associated with the frame of the seat or the set of seats (10) under which the device is located.

## Patentansprüche

1. Vorrichtung gegen Angriffe (Antiattentat-Vorrichtung) zum Verhindern des Zugangs unter einen Sitz oder einer Sitzgruppe (10) insbesondere an einem öffentlichen Ort oder in einem Fahrzeug eines öffentlichen Verkehrsmittels, wobei die Vorrichtung Einrichtungen zum Befestigen an dem Sitz oder an der Sitzgruppe und/oder an einer festen Struktur aufweist, **dadurch gekennzeichnet, daß** die Vorrichtung aufweist:
mehrere bewegliche Paneele (20,22), die an verschiedenen Seiten des Sitzes oder der Sitzgruppe angeordnet sind und mit gemeinsamen Betätigungseinrichtungen (32,34,36) verbunden sind, die erlauben, die Paneele gleichzeitig zwischen ersten Positionen, in welchen ein Zugang zu einem freien Raum unter dem Sitz oder der Sitzgruppe verhindert wird, und zweiten Positionen, die diesen Zugang erlauben, zu bewegen, und Einrichtungen (46, 48, 50) zum Verriegeln der Paneele zumindest in ihren ersten Positionen.

2. Vorrichtung nach Anspruch 1, **dadurch gekennzeichnet, daß** jedes Paneel drehbar um eine feste Achse (24, 26) an einem Rahmen (28) angebracht ist, der die oben erwähnten Befestigungseinrichtungen trägt.

3. Vorrichtung nach Anspruch 2, **dadurch gekennzeichnet, daß** die Drehachse (24, 26) jedes Paneels (20, 22) im wesentlichen horizontal ist und das Paneel zwischen einer abgesenkten, einen Zugang verhindernden Position, in welcher es im wesentlichen vertikal ist, und einer angehobenen Position beweglich ist, in welcher es im wesentlichen horizontal ist und unter den Sitz oder die Sitzgruppe (10) geklappt ist.

4. Vorrichtung nach Anspruch 2 oder 3, **dadurch gekennzeichnet, daß** die Paneele (20, 22) über Schwingarme (36) mit einem Drehelement (34) verbunden sind, das von dem Träger (28) getragen wird und drehbar um eine vertikale Achse angebracht ist.

5. Vorrichtung nach Anspruch 3 oder 4, **dadurch gekennzeichnet, daß** in den ersten Positionen die Paneele (20,22) im wesentlichen senkrecht zueinander sind.

6. Vorrichtung nach einem der vorstehendem Ansprüche, **dadurch gekennzeichnet, daß** die Paneele (20,22) vollwandige oder durchbrochene Platten, perforierte Platten oder Gitter sind.

7. Vorrichtung nach einem der Ansprüche 1 bis 3, **dadurch gekennzeichnet, daß** jedes Paneel einen Rolladen aufweist, der über eine Drehwelle läuft oder auf eine Drehwelle aufgerollt wird.

8. Vorrichtung nach einem der Ansprüche 2 bis 7, **dadurch gekennzeichnet, daß** ihr Rahmen (28) mit dem Rahmen des Sitzes oder der Sitzgruppe (10), unter welchem/welcher die Vorrichtung angeordnet ist, integriert oder verbunden ist.
